# EUROPEAN PATENT APPLICATION

(11) **EP 1 284 280 A2**
(43) Date of publication of application: **19.02.2003**
(21) Application number: 01308426.4
(22) Date of filing: 02.10.2001
(51) Int. Cl.: C09K 11/84, H05B 33/14

(54) **Phosphor thin film and EL panel**

(30) Priority: 10.08.2001 JP 2001244278
(71) Applicant: TDK Corporation, Chuo-ku, Tokyo 103-8272 (JP)
(72) Inventor: Yano, Yoshihiko, Tokyo 103-8272 (JP); Oike, Tomoyuki, Tokyo 103-8272 (JP)
(74) Representative: Wise, Stephen James

(57) **Abstract**

A phosphor thin film made of a matrix material comprising an alkaline earth sulfide and a luminescence center and having a thickness of 50-300 nm emits light. especially red light, of a good color purity at a high luminance and in a good response and enables to produce an EL panel.

## Description

### TECHNICAL FIELD

This invention relates to an electroluminescent (EL) thin film for use as a light emitting layer in inorganic EL devices, and more particularly, to a phosphor thin film in the form of an alkaline earth sulfide thin film having a light emitting function and an EL panel using the same.

### BACKGROUND OF THE INVENTION

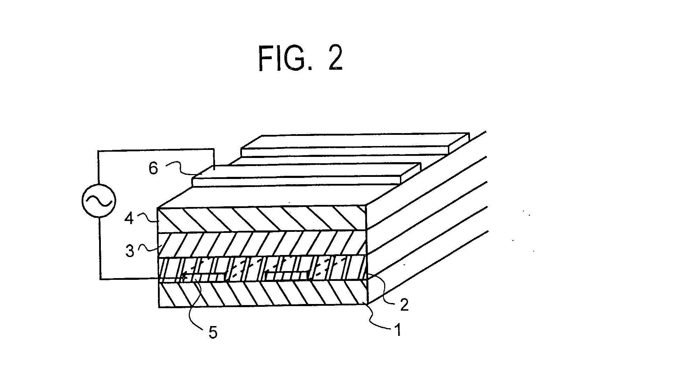

In the recent years, active research works have been made on thin-film EL devices as small or large-size, lightweight flat panel displays. A monochromatic thin-film EL display using a phosphor thin film of manganese-doped zinc sulfide capable of emitting yellowish orange light has already become commercially practical as a dual insulated structure using thin-film insulating layers 2 and 4 as shown in FIG. 2. In FIG. 2, a predetermined pattern of lower electrodes 5 is formed on a substrate 1, and a first insulating layer 2 is formed on the lower electrode-bearing substrate 1. On the first insulating layer 2, a light-emitting layer 3 and a second insulating layer 4 are successively formed. On the second insulating layer 4, a predetermined pattern of upper electrodes 6 is formed so as to construct a matrix circuit with the lower electrodes 5.

Thin-film EL displays must display images in color in order that they find use as computer, TV and similar monitors. Thin-film EL displays using sulfide phosphor thin films are fully reliable and resistant to environment, but at present regarded unsuitable as color displays because EL phosphors required to emit light in the primaries of red, green and blue have poor characteristics. Engineers continued research on SrS:Ce (using SrS as a matrix material and Ce as a luminescence center) and ZnS:Tm as a candidate for the blue light-emitting phosphor, ZnS:Sm and CaS:Eu as a candidate for the red light-emitting phosphor, and ZnS:Tb and CaS:Ce as a candidate for the green light-emitting phosphor.

These phosphor thin films capable of emitting light in the primaries of red, green and blue suffer from problems of emission luminance, emission efficiency and color purity. Thus color EL panels have not reached the commercial stage. With respect to red, in particular, it is known that CaS:Eu produces light emission of relatively good color purity. Improved phosphors are disclosed in JP-A 1-206594 and JP-A 2-148688. Their emission factors including luminance and efficiency are still short as the red color for full-color display. As described in JP-A 2-51891 and TV Society Technical Report Vol. 16, No. 76, pp. 7-11, the response time is as long as several seconds to several tens of seconds. These phosphors as such are impractical as the red light for a full-color moving image display which must make real-time response to drive signals.

With respect to the red color, a customary practice for acquiring red light is to use a ZnS:Mn film which is an orange phosphor thin film having a high luminance and efficiency and pass the light through a color filter to cut out red light in the wavelength region necessary as the panel from the EL spectrum of the phosphor thin film. Use of a filter complicates the manufacture process and, still worse, brings about a lowering of luminance. When red is taken out through the filter, the luminance of red EL phosphor thin film suffers a loss of 10 to 20% so that the luminance is reduced below the practically acceptable level.

To simultaneously solve the above-discussed problems, there remains a need for a red phosphor thin film material capable of emitting light of a sufficient color purity to eliminate a need for a filter, at a high luminance and in good response.

### SUMMARY OF THE INVENTION

An object of the invention is to provide a phosphor thin film which emits light of a sufficient color purity to eliminate a need for a filter, with a good response and especially red light suitable for a full-color EL panel. Another object is to provide an EL panel comprising the same.

This and other objects are attained by the present invention which provides a phosphor thin film made of a matrix material comprising an alkaline earth sulfide and a luminescence center. The phosphor thin film should have a thickness in the range of 50 nm to 300 nm.

Preferably, the phosphor thin film essentially contains europium as the luminescence center, and the alkaline earth sulfide comprises at least calcium sulfide.

In a typical configuration, a zinc sulfide thin film lies on the phosphor thin film. More preferably, the phosphor thin film and the zinc sulfide thin film form a structure in which the phosphor thin film is sandwiched between zinc sulfide thin films, that is, ZnS thin film/phosphor thin film/ZnS thin film, or a structure in which a plurality of phosphor thin films and a plurality of zinc sulfide thin films are alternately stacked such that zinc sulfide thin films are at outermost sides.

Also contemplated herein is an EL panel comprising the phosphor thin film.

The present invention is predicated on the synthesis of calcium sulfide:europium phosphor thin film. This phosphor thin film emits red light of high color purity at a high luminance.

First, the inventors produced thin films of CaS:Eu as a phosphor thin film for EL devices using a conventional method. Using the thin films, EL devices were fabricated, but failed to produce desired light emission. The thin films thus formed provided a luminance of about 200 cd/m² when driven at 1 kHz. The response time taken from the voltage application until the stabilization of light emission was as long as several seconds to several tens of seconds. In order for the EL device to be applied to a panel, it was necessary to increase the luminance and improve the response of the phosphor thin film.

Based on the foregoing results, the inventors continued study on phosphor thin films. The inventors have found that by reducing the thickness of calcium sulfide matrix material and adopting a structure using zinc sulfide buffer in combination therewith, the luminance is dramatically increased and the response time is reduced from several seconds to several tens of seconds in the prior art to 10 milliseconds to 100 milliseconds.

### BRIEF DESCRIPTION OF THE DRAWINGS

FIG. 1 is a schematic cross-sectional view showing an exemplary construction of manufacturing apparatus to which the invention is applicable.
FIG. 2 is a partially cross-sectional, perspective view showing an exemplary construction of an inorganic EL device according to the invention.
FIG. 3 is a light emission spectrum of the EL device or panel in Example 1.
FIG. 4 is a graph showing the luminance of the EL device or panel in Example 2 as a function of the thickness of CaS thin film.
FIG. 5 is a graph showing the luminance of the EL device or panel in Example 3 as a function of Eu concentration.

### DESCRIPTION OF THE PREFERRED EMBODIMENTS

The phosphor thin film of the invention is made of a matrix material comprising an alkaline earth sulfide. A rare earth element or another suitable element is added to the matrix material as a luminescence center.

The alkaline earth element is selected from Be, Mg, Ca, Sr, Ba and Ra. Of these, Mg, Ca, Sr and Ba are preferred, with Ca being especially preferred. Mixtures of two or more alkaline earth elements, such as mixtures of Ca+Sr and Ca+Mg are also acceptable.

The element added as the luminescence center is one or more elements selected from among transition metals such as Mn and Cu, rare earth elements, Pb and Bi. The rare earth elements include Sc, Y, La, Ce, Pr, Nd, Gd, Tb, Ho, Er, Tm, Lu, Sm, Eu, Dy and Yb. Of these, Eu and Ce are preferred for the blue phosphor, Eu, Ce, Tb and Ho are preferred for the green phosphor, and Pr, Eu, Sm, Yb and Nd are preferred for the red phosphor.

Among others, the preferred luminescence center elements to be combined with the matrix material to form a red phosphor are Eu, Pr and Sm, with Eu being most preferred. An appropriate (total) amount of the luminescence center element(s) is 0.1 to 10 at% based on the alkaline earth atoms. For CaS, an appropriate amount is 0.1 to 0.5 at%, and most preferably 0.2 to 0.4 at%. The luminescence center element may be added alone or in combination with one or more other elements. When Eu is used as the luminescence center, for example, the addition of Cu or Ce thereto can improve the response and luminance of light emission.

The phosphor thin film should have a thickness in the range of 50 nm to 300 nm and preferably 100 nm to 250 nm. Too thick a film requires an increased drive voltage and adversely affects the response, taking several seconds to several tens of seconds until emission. Too thin a film results in a low emission efficiency. A film thickness in the above range ensures that an EL device is improved in both the response and luminance of light emission.

In a preferred embodiment, the EL thin film has a structure of ZnS thin film/phosphor film/ZnS thin film. As long as the phosphor thin film is thin, the sandwiching between ZnS thin films is effective for improving the electric charge injection and withstand voltage of the phosphor thin film. This is true especially when CaS:Eu is used as the phosphor thin film, providing a red EL thin film with a high luminance and good response. The ZnS thin film may have a thickness of about 30 to 400 nm, and preferably about 100 to 300 nm.

In another preferred embodiment, the EL thin film has a structure of phosphor thin film and ZnS thin film in which the phosphor thin film is sandwiched between ZnS thin films, that is, ZnS thin film/phosphor thin film/ZnS thin film, or a structure in which a plurality of phosphor thin films and a plurality of ZnS thin films are alternately stacked such that ZnS thin films are at uppermost and lowermost sides. More illustratively, the EL thin film may have a structure of ZnS thin film/phosphor thin film/ZnS thin film, a structure of ZnS thin film/phosphor thin film/ZnS thin film/phosphor thin film/ZnS thin film, or a multilayer structure of ZnS thin film/phosphor thin film/ZnS thin film/ (repeated) /phosphor thin film/ZnS thin film.

Such a phosphor thin film is preferably prepared, for example, by the following evaporation process. Reference is now made to a CaS:Eu phosphor thin film as a typical example.

More particularly, a calcium sulfide pellet having europium added is prepared. The pellet is evaporated with an electron beam (EB) in a vacuum chamber into which H₂S gas is admitted. The H₂S gas is used so that sulfur may react with the evaporated reactant, in order to avoid the thin film being deposited from becoming short of sulfur.

The formation of a thin film may be followed by annealing treatment. More particularly, after a calcium sulfide thin film is formed by reactive evaporation using a calcium sulfide pellet having Eu added thereto and H₂S gas, annealing treatment is preferably carried out in a reducing atmosphere such as nitrogen, Ar or vacuum or an oxidizing atmosphere such as oxygen or air. For example, after a thin film is formed by reactive evaporation using a calcium sulfide pellet having Eu added thereto and hydrogen sulfide (H₂S) gas, annealing is carried out in air. The preferred annealing conditions include an oxidizing atmosphere having an oxygen concentration equal to or above the ambient atmosphere and a temperature in the range of about 500 to 1,000°C, and more preferably about 600 to 800°C.

Eu added to the source substance may take the form of metal, fluoride, oxide or sulfide. Since the amount of Eu added varies depending on the source substance and the thin film to be deposited, the composition of the source substance is adjusted so as to achieve an appropriate dosage.

During the evaporation, the temperature of the substrate may be at room temperature to 600°C, preferably 300 to 500°C. If the substrate temperature is too high, the thin film of matrix material may have more asperities on its surface and contain pin holes therein, giving rise to the problem of current leakage on EL devices. Also the thin film can be colored brown. For this reason, the aforementioned temperature range is preferable. The film deposition is preferably followed by annealing. The preferred annealing temperature is 600 to 1,000°C, and more preferably about 600 to 800°C.

The alkaline earth sulfide phosphor thin film thus formed is preferably a highly crystalline thin film. Crystallinity can be evaluated by x-ray diffraction, for example. To promote crystallinity, the substrate temperature is set as high as possible. It is also effective to anneal the thin film in vacuum, N₂, Ar, air, oxygen, sulfur vapor or H₂S after its formation.

The pressure during evaporation is preferably 1.33x10⁻⁴ to 1.33x10⁻¹ Pa (1x10⁻⁶ to 1x10⁻³ Torr). When a gas such as H₂S is introduced, the pressure may be adjusted to 6.65x10⁻³ to 6.65x10⁻² Pa (5x10⁻⁵ to 5x10⁻⁴ Torr). If the pressure exceeds the range, the operation of the electron gun becomes unstable, and composition control becomes very difficult. The rate of gas feed is preferably 5 to 200 standard cubic centimeters per minute (SCCM), especially 10 to 30 SCCM although it varies depending on the capacity of the vacuum system.

If desired, the substrate may be moved or rotated during evaporation. By moving or rotating the substrate, the deposited film becomes uniform in composition and minimized in the variation of thickness distribution.

When the substrate is rotated, the number of revolutions is preferably at least about 10 rpm, more preferably about 10 to 50 rpm, and especially about 10 to 30 rpm. If the rotational speed of the substrate is too high, there may arise a problem of seal upon admission into the vacuum chamber. If the rotational speed of the substrate is too low, compositional gradation may occur in the thickness direction within the chamber so that the resulting light emitting layer may have poor characteristics. The means for rotating the substrate may be any well-known rotating mechanism including a power source such as a motor or hydraulic rotational mechanism and a power transmission/gear mechanism having a combination of gears, belts, pulleys and the like.

The means for heating the evaporation source and the substrate may be selected, for example, from tantalum wire heaters, sheath heaters and carbon heaters, as long as they have the predetermined thermal capacity, reactivity or the like. The temperature reached by the heating means is preferably in the range of about 100 to about 1,400°C, and the precision of temperature control is about ±1°C, preferably about ±0.5°C at 1,000°C.

The sulfide phosphor thin film thus formed is preferably a highly crystalline thin film. Crystallinity can be evaluated by x-ray diffraction, for example. To promote crystallinity, the substrate temperature is set as high as possible. It is also effective to anneal the thin film in vacuum, N₂, Ar, sulfur vapor or H₂S after its formation. Especially, by forming an alkaline earth sulfide thin film according to the above-mentioned procedure and then effecting annealing treatment in an oxidizing atmosphere, an EL thin film capable of light emission at a high luminance is obtained.

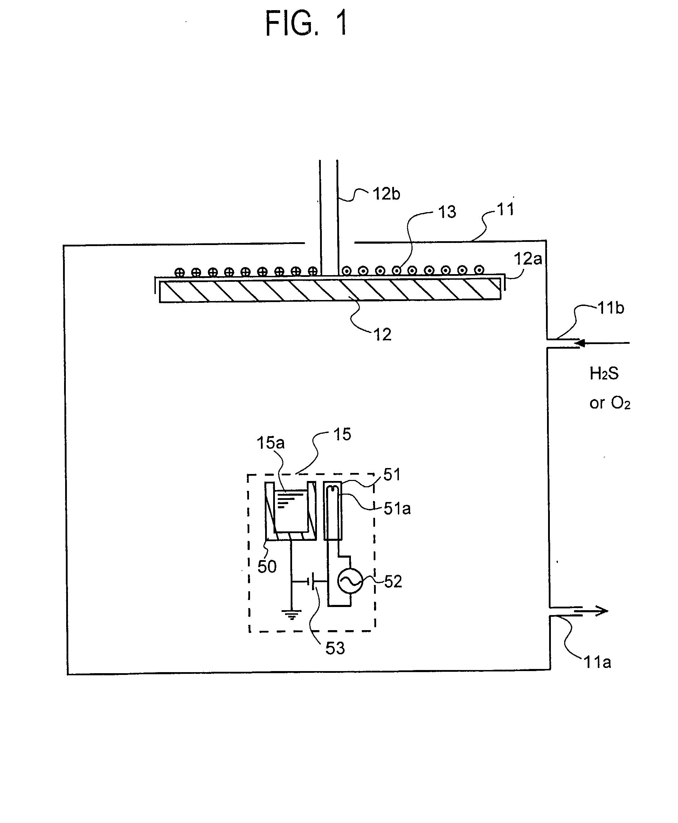

FIG. 1 illustrates one exemplary construction of the apparatus for forming the light emitting layer according to the invention. Reference is made to an embodiment wherein Eu-doped alkaline earth sulfide thin film is produced by using Eu-added alkaline earth sulfide as the evaporation source and admitting H₂S during evaporation. In the illustrated embodiment, a substrate 12 on which the light emitting layer is to be deposited and an EB evaporation source 15 are disposed within a vacuum chamber 11.

The electron beam (EB) evaporation source 15 serving as means for evaporating alkaline earth sulfide include a crucible 50 which contains alkaline earth sulfide 15a and an electron gun 51 having an electron emitting filament 51a built therein. Built in the electron gun 51 is a mechanism for controlling an electron beam. To the electron gun 51 are connected an AC power supply 52 and a bias power supply 53. The electron gun 51 produces an electron beam at a predetermined power in a controlled manner, for evaporating the alkaline earth sulfide 15a at a predetermined rate. Understandably, the luminescence center such as Eu has been added to the alkaline earth sulfides 15a.

In the illustrated embodiment, the evaporation source 15 is depicted, for the convenience of illustration, at a position corresponding to a local area of the substrate. Actually, the evaporation source is located such that the deposited film may become uniform in composition and thickness.

The vacuum chamber 11 has an exhaust port 11a through which the chamber is evacuated to establish a predetermined vacuum in the chamber 11. The vacuum chamber 11 also has an inlet port 11b through which a reactant gas such as hydrogen sulfide is admitted into the chamber.

The substrate 12 is fixedly secured to a substrate holder 12a. The holder 12a has a shaft 12b which is rotatably held by an outside rotating shaft mount (not shown) so that the vacuum may be maintained in the chamber 11. The shaft 12b is adapted to be rotated at a predetermined number of revolutions by a rotating means (not shown). A heating means 13 in the form of a heater wire is closely secured to the substrate holder 12a so that the substrate may be heated and maintained at the desired temperature.

Using the illustrated apparatus, the vapor of alkaline earth sulfide is evaporated from the EB evaporation source 15 and deposited and bound on the substrate 12 to form a fluorescent layer of Eu-doped alkaline earth sulfide. By rotating the substrate 12 during the evaporation process if desired, the light emitting layer being deposited can be made more uniform in composition and thickness distribution.

Using the phosphor thin film of the invention as a light emitting layer 3, an inorganic EL device is manufactured, for example, to the structure shown in FIG. 2.

FIG. 2 is a partially cross-sectional, perspective view showing an exemplary construction of the inorganic EL device using the light emitting layer of the invention. In FIG. 2, a predetermined pattern of lower electrodes 5 is formed on a substrate 1, and a first thick insulating layer (or thick-film dielectric layer) 2 is formed on the lower electrodes 5. On the first insulating layer 2, a light-emitting layer 3 and a second insulating layer (or thin-film dielectric layer) 4 are successively formed. On the second insulating layer 4, a predetermined pattern of upper electrodes 6 is formed so as to construct a matrix circuit with the lower electrodes 5. The red, green or blue phosphor thin film is selectively coated at the intersections of matrix electrodes.

Between two adjacent ones of the substrate 1, electrodes 5, 6, thick-film insulating layer 2 and thin-film insulating layer 4, an intermediate layer such as a bond enhancing layer, stress relief layer or reaction preventing barrier layer may be disposed. The thick film may be improved in smoothness as by polishing its surface or using a smoothing layer.

Preferably, a BaTiO₃ thin-film layer is formed as the barrier layer between the thick-film insulating layer and the thin-film insulating layer.

Any desired material may used as the substrate as long as the substrate has a heat resistant temperature or melting point of at least 600°C, preferably at least 700°C, especially at least 800°C so that the substrate may withstand the thick-film forming temperature, the forming temperature of the EL fluorescent layer and the annealing temperature of the EL device, the substrate allows deposition thereon of functional thin films such as a light emitting layer by which the EL device can be constructed, and the substrate maintains the predetermined strength. Illustrative examples include glass substrates, ceramic substrates of alumina (Al₂O₃), forsterite (2MgO·SiO₂), steatite (MgO·SiO₂), mullite (3Al₂O₃·2SiO₂), beryllia (BeO), aluminum nitride (AlN), silicon nitride (SiN), and silicon carbide (SiC+BeO) as well as heat resistant glass substrates of crystallized glass or the like. Of these, alumina substrates and crystallized glass substrates are especially preferable. Where heat transfer is necessary, beryllia, aluminum nitride, silicon carbide and the like are preferred.

Also useful are quartz, heat oxidized silicon wafers, etc. as well as metal substrates such as titanium, stainless steel, Inconel and iron base materials. Where electro-conductive substrates such as metal substrates are used, a structure in which a thick film having an internal electrode is formed on a substrate is preferred.

Any well-known thick-film dielectric material may be used as the thick-film dielectric material (first insulating layer). Materials having a relatively high permittivity are preferred.

For example, lead titanate, lead niobate and barium titanate based materials can be used.

The dielectric thick film has a resistivity of at least 10⁸ Ω·cm, especially about 10¹⁰ to 10¹⁸ Ω·cm. A material having a relatively high permittivity as well is preferred. The permittivity ε is preferably about 100 to 10,000. The preferred thickness is 5 to 50 µm, especially 10 to 30 µm.

The insulating layer thick film is formed by any desired method. Methods capable of relatively easily forming films of 10 to 50 µm thick are useful, and the sol-gel method and printing/firing method are especially preferred.

Where the printing/firing method is employed, a material is fractionated to an appropriate particle size and mixed with a binder to form a paste having an appropriate viscosity. The paste is applied onto a substrate by a screen printing technique, and dried. The green sheet is fired at an appropriate temperature, yielding a thick film.

Examples of the material of which the thin-film insulating layer (second insulating layer) is made include silicon oxide (SiO₂), silicon nitride (SiN), tantalum oxide (Ta₂O₅), strontium titanate (SrTiO₃), yttrium oxide (Y₂O₃), barium titanate (BaTiO₃), lead titanate (PbTiO₃), PZT, zirconia (ZrO₂), silicon oxynitride (SiON), alumina (Al₂O₃), lead niobate, PMN-PT base materials, and multilayer or mixed thin films of any. In forming the insulating layer from these materials, any of conventional methods such as evaporation, sputtering, CVD, sol-gel and printing/firing methods may be used. The insulating layer preferably has a thickness of about 50 to 1,000 nm, especially about 100 to 500 nm.

The electrode (lower electrode) is formed at least on the substrate side or within the first dielectric layer. As the electrode layer which is exposed to high temperature during formation of a thick film and during heat treatment along with the light emitting layer, use may be made of a customary metal electrode containing as a main component one or more elements selected from palladium, rhodium, iridium, rhenium, ruthenium, platinum, tantalum, nickel, chromium and titanium.

Another electrode layer serving as the upper electrode is preferably a transparent electrode which is transmissive to light in the predetermined emission wavelength region because the emitted light often exits from the opposite side to the substrate. When the substrate and insulating layer are transparent, a transparent electrode may also be used as the lower electrode because this permits the emitted light to exit from the substrate side. Use of transparent electrodes of ZnO, ITO or the like is especially preferred. ITO generally contains In₂O₃ and SnO in stoichiometry although the oxygen content may deviate somewhat therefrom. An appropriate proportion of SnO₂ mixed with In₂O₃ is about 1 to 20% by weight, more preferably about 5 to 12% by weight. For IZO, an appropriate proportion of ZnO mixed with In₂O₃ is generally about 12 to 32% by weight.

Also the electrode may be a silicon-based one. The silicon electrode layer may be either polycrystalline silicon (p-Si) or amorphous silicon (a-Si), or even single crystal silicon if desired.

In addition to silicon as the main component, the electrode is doped with an impurity for imparting electric conductivity. Any dopant may be used as the impurity as long as it can impart the desired conductivity. Use may be made of dopants commonly used in the silicon semiconductor art. Exemplary dopants are B, P, As, Sb, Al and the like. Of these, B, P, As, Sb and Al are especially preferred. The preferred dopant concentration is about 0.001 to 5 at%.

In forming the electrode layer from these materials, any of conventional methods such as evaporation, sputtering, CVD, sol-gel and printing/firing methods may be used. In forming a structure in which a thick film having an internal electrode is formed on a substrate, the same method as used in forming the dielectric thick film is preferred.

The electrode layer should preferably have a resistivity of up to 1 Ω·cm, especially about 0.003 to 0.1 Ω·cm in order to apply an effective electric field across the light emitting layer. The preferred thickness of the electrode layer is about 50 to 2,000 nm, especially about 100 to 1,000 nm although it depends on the electrode material.

The EL panel of the invention has been described while it can be applied to other forms of display device, typically full-color panels, multicolor panels and partial color panels partially displaying three colors.

### EXAMPLE

Examples are given below for illustrating the invention in more detail.

### Example 1

An EL device (or panel) was fabricated using a phosphor thin film according to the invention. For the substrate and thick-film insulating layer, BaTiO₃ base dielectric material having a permittivity of 5,000 was commonly used. For the lower electrode, a Pd electrode was used. On fabrication, a sheet of the substrate was formed, and the lower electrode and thick-film insulating layer were screen printed thereon to form a green sheet, which was co-fired. The surface was polished, obtaining the substrate bearing a thick-film first insulating layer of 30 µm thick. On this substrate, a BaTiO₃ coating was formed by sputtering as a barrier layer to 400 nm. This was annealed in air at 700°C, obtaining a composite substrate.

On the composite substrate, a structure of Al₂O₃ film (50 nm)/EL thin film/Al₂O₃ film (50 nm) was formed in order that the resulting EL device produce stable light emission. The EL thin film had a structure of ZnS film (200 nm)/phosphor thin film (200 nm)/ZnS film (200 nm).

The phosphor thin film was prepared using the following apparatus. FIG. 1 shows one exemplary evaporation apparatus which can be used in the manufacturing method of the invention.

An EB source 15 loaded with CaS powder having 0.5 mol% Eu added was placed in a vacuum chamber 11 into which H₂S gas was admitted. The CaS was evaporated from the source and deposited on a rotating substrate heated at 400°C, forming a thin film. The evaporation rate of the source was adjusted such that the film was deposited on the substrate at a deposition rate of 1 nm/sec. The H₂S gas was fed at 20 SCCM. In this way, a phosphor thin film was formed. Specifically the thin film was obtained as the structure of Al₂O₃ film (50 nm)/ZnS film (200 nm)/phosphor thin film (300 nm)/ZnS film (200 nm)/Al₂O₃ film (50 nm). The structure was annealed in air at 750°C for 10 minutes.

Similarly, a phosphor thin film was formed on a Si substrate. The resulting phosphor thin film in the form of CaS:Eu thin film was analyzed for composition by fluorescent x-ray analysis, finding an atomic ratio of Ca:S:Eu = 23.07:24.00:0.15. That is, the Eu concentration in CaS was 0.318 mol%.

By RF magnetron sputtering technique using an ITO oxide target, a transparent ITO electrode of 200 nm thick was formed on the resulting structure at a substrate temperature of 250°C to complete an EL device.

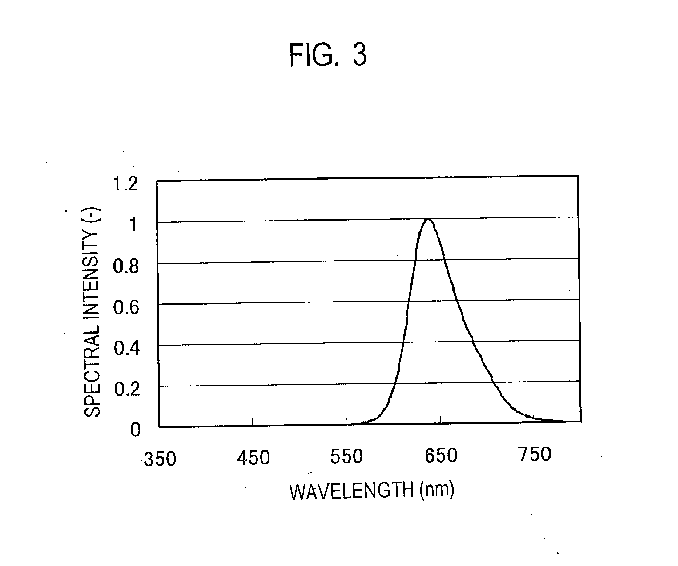

By applying an electric field having a frequency of 1 kHz and a pulse width of 50 µS to the two electrodes of the EL device, red light emission having a luminance of 1023 cd/m² and (0.69, 0.31) in CIE 1931 chromaticity diagram was produced in a reproducible manner. The response of this EL device was improved to 20 mS over the response of several seconds to several tens of seconds in the prior art. FIG. 3 shows a light emission spectrum of this device.

### Example 2

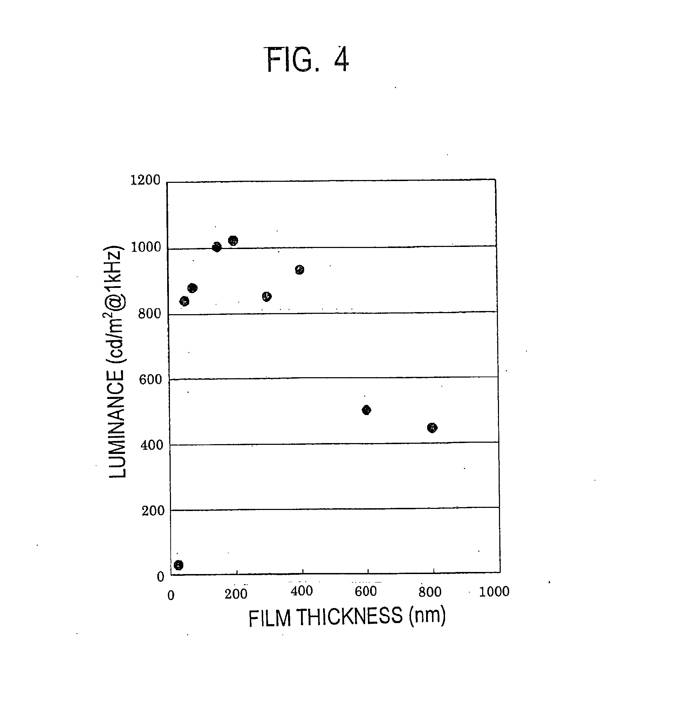

In Example 1, the thickness of CaS film was changed as shown in Table 1. The luminance and response were measured at each film thickness. The results are shown in Table 1 and FIG. 4. It is noted that the response was rated "O" when it is less than 30 mS, "Δ" when within 30-300 mS, and "X" when more than 300 mS.

**Table 1**

| Sample No. | CaS film thickness (nm) | Luminance (cd/m²) | Response |
|---|---|---|---|
| 1 | 25 | 30 | - |
| 2 | 50 | 840 | ○ |
| 3 | 75 | 880 | ○ |
| 4 | 150 | 1003 | ○ |
| 5 | 200 | 1023 | ○ |
| 6 | 300 | 851 | Δ |
| 7 | 400 | 931 | × |
| 8 | 600 | 501 | × |
| 9 | 800 | 446 | × |

As is evident from Table 1 and FIG. 4, a satisfactory emission luminance of more than 800 cd/m² and a good response are obtained as long as the CaS phosphor thin film has a thickness in the range of 50 nm to 300 nm.

### Example 3

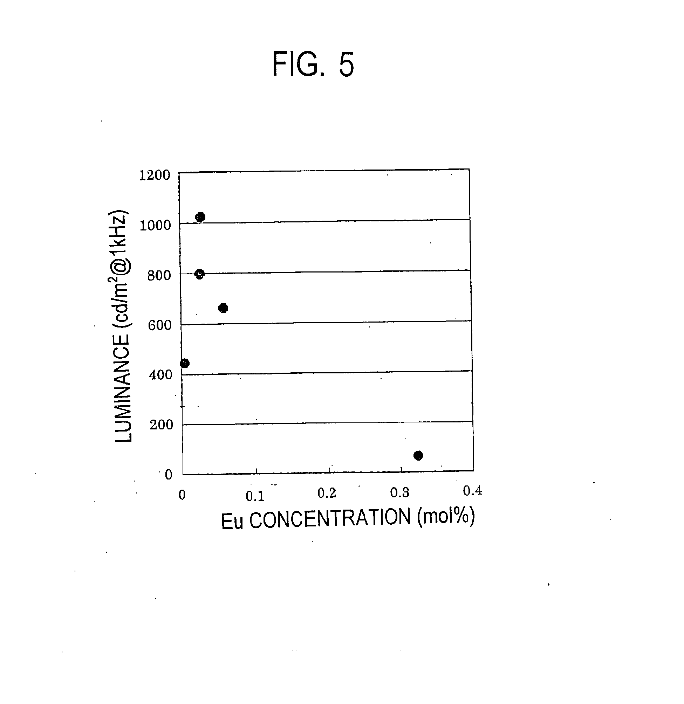

In Example 1, the concentration of Eu added to the CaS phosphor matrix material was changed as shown in Table 2. The emission luminance was measured at each Eu concentration. The results are shown in Table 2 and FIG. 5.

**Table 2**

| Sample No. | Eu concentration (mol%) | Luminance (cd/m²) |
|---|---|---|
| 11 | 0.04757 | 446 |
| 12 | 0.27013 | 797 |
| 13 | 0.29217 | 1023 |
| 14 | 0.579486 | 661 |
| 15 | 3.240738 | 63 |

As is evident from Table 2 and FIG. 5, a satisfactory emission luminance is achieved when the amount of Eu added to CaS is 0.1 to 0.5 mol% (at%).

### Example 4

An EL device was fabricated as in Example 1 except that the EL thin film was ZnS thin film (200 nm)/phosphor thin film (200 nm)/ZnS thin film (100 nm)/phosphor thin film (200 nm)/ZnS thin film (200 nm).

By applying an electric field having a frequency of 1 kHz and a pulse width of 50 µS to the two electrodes of the EL device, red light emission having a luminance of 848 cd/m² and (0.69, 0.31) in CIE 1931 chromaticity diagram was produced in a reproducible manner. The response of this EL device was improved to 25 mS over the response of prior art devices having a CaS:Eu layer having a thickness of 600 nm or more.

### Example 5

An EL device was fabricated as in Example 1 except that Cu was further added to Eu as the luminescence center and a structure of ZnS film (200 nm)/phosphor thin film (200 nm)/ZnS film (200 nm) was formed. The results were substantially equivalent to those of Example 1. Notably, the response was further improved to 10 mS.

### Example 6

EL devices were fabricated as in Example 1 except that one or more of Mg, Ca and Ba were used instead of or in addition to Ca as the alkaline earth metal. The results were substantially equivalent to those of Example 1.

The luminance was improved to 1,000 to 1,500 cd/m². The chromaticity of red light shifted to the orange side.

It is thus evident that the EL thin film of the invention provides a high luminance using a red phosphor thin film material capable of emitting light of a good color purity and a high luminance without a need for a filter.

The EL device using the thin film is improved in response, enables to produce a light emitting layer in a reproducible manner when multicolor EL devices or full color EL devices are formed, and is thus of great commercial worth.

There have been described a phosphor thin film which emits light of a sufficient color purity and luminance to eliminate a need for a filter, and in a good response and especially red light suitable in a full-color EL panel as well as an EL panel comprising the same.

## Claims

1. A phosphor thin film made of a matrix material comprising an alkaline earth sulfide and a luminescence center, said thin film having a thickness in the range of 50 nm to 300 nm.

2. The phosphor thin film of claim 1 essentially containing europium as the luminescence center.

3. The phosphor thin film of claim 1 wherein said alkaline earth sulfide comprises at least calcium sulfide.

4. The phosphor thin film of claim 1 on which a zinc sulfide thin film lies.

5. The phosphor thin film of claim 4 wherein said phosphor thin film and said zinc sulfide thin film form a structure in which the phosphor thin film is sandwiched between zinc sulfide thin films or a structure in which a plurality of phosphor thin films and a plurality of zinc sulfide thin films are alternately stacked such that zinc sulfide thin films are at outermost sides.

6. An EL panel comprising the phosphor thin film of any one of claims 1 to 5.
